# EUROPÄISCHE PATENTSCHRIFT

(11) **EP 3 137 763 B1**
(45) Veröffentlichungstag und Bekanntmachung des Hinweises auf die Patenterteilung: **27.03.2019**
(21) Anmeldenummer: 15723441.0
(22) Anmeldetag: 28.04.2015
(51) Int. Cl.: F03D 5/00, B64C 31/06, F03D 9/00, F03D 9/10, F03D 9/17, F03D 15/00, F03D 9/25, F03D 9/32, F03D 9/30, F03D 13/25

(54) **VORRICHTUNG ZUR STEUERUNG UND LENKUNG VON ZUGDRACHEN ODER ROTIERENDEN FLÜGELRÄDERN ZUR STROMERZEUGUNG**
DEVICE FOR CONTROLLING AND STEERING TRACTION KITES OR ROTATING FLYER WHEELS FOR ELECTRICITY GENERATION
DISPOSITIF DE COMMANDE ET DE DIRECTION DE CERFS-VOLANTS DE TRACTION OU DE ROUES À AILETTES ROTATIVES POUR LA PRODUCTION DE COURANT

(30) Priorität: 28.04.2014 DE 102014105944
(43) Veröffentlichungstag der Anmeldung: 08.03.2017
(73) Patentinhaber: Miller, Bernhard, 71263 Weil der Stadt (DE)
(72) Erfinder: Miller, Bernhard, 71263 Weil der Stadt (DE)
(74) Vertreter: Patentanwälte und Rechtsanwalt Weiß, Arat & Partner mbB
(86) Internationale Anmeldenummer: PCT/EP2015/059228
(87) Internationale Veröffentlichungsnummer: WO 2015/165913

(56) Entgegenhaltungen:
- WO-A2-2008/034421
- DE-A1- 2 437 003
- US-A1- 2011 025 060
- US-A1- 2013 134 261

## Beschreibung

Die Erfindung betrifft eine Vorrichtung zur Steuerung und Lenkung von Zugdrachen nach dem Oberbegriff des Anspruchs 1.

### Stand der Technik

Windkraftanlagen mit rotatorischem Antrieb finden bereits weite Verbreitung bei der Erzeugung von Strom aus der Windkraft. Weiterhin sind bereits vielfältige Möglichkeiten zur Nutzung von Windenergie bekannt, so z.B. auch die Stromerzeugung mittels Zugdrachen. Dabei wird das Fieren eines oder mehrerer Zugdrachen zur Stromerzeugung genutzt wie z.B. aus Offenlegungsschrift DE 10 2008 047 261 A1 bekannt.

Außerdem wird auf die WO 2008/034421 A2 hingewiesen. Dort ist ein Drachen-Kraftwerk offenbart, bei dem eine Vielzahl von Drachen unter Ausnutzung der Windenergie Elektrizität erzeugen sollen.

Weiter wird auf die US 2013/0134261 A1 hingewiesen. Auch dort wird unter Ausnutzung der Windkraft durch einen Drachen Elektrizität erzeugt.

Zuletzt wird auf die DE 24 37003 A1 hingewiesen. Dort ist ein Windkraftwerk mit periodisch arbeitenden großen Tragflügelballonen offenbart.

### Problemstellung

Zur Positionierung bzw. Steuerung der Zugdrachen müssen zusätzliche Steuerungseinrichtungen geschaffen werden wie z.B. das Anbringen motorisch betriebener Steuerseile unterhalb oder im jeweiligen Zugdrachen. Wegen der eingeschränkten Positioniergenauigkeit wird ein erheblicher Abstand zwischen einzelnen Gruppen von Zugdrachen benötigt.

Außerdem ist die Bodenstationen bei verschiedenen Konzepten dreh- oder fahrbar gelagert, was einen technischen Zusatzaufwand bedeutet und die Anlage verteuert.

### Lösung

Zur Lösung führen die Merkmale nach Anspruch 1.

In der hier beschriebenen Anmeldung wird eine Vorrichtung zur Steuerung und Lenkung von Zugdrachen beschrieben, welche zur Erzeugung von Strom aus Windkraft benutzt wird.

Zur Steuerung der Zugkraft weisen die Zugdrachen der hier beschriebenen Erfindung jeweils zwei Zugseile auf. Diese Zugseile werden durch Verwendung einer Umlenkrolle vorzugsweise gleichermaßen belastet. Mit Hilfe einer relativen Längenänderung der Zugseile untereinander kann die wirksame Zugkraft variiert werden. Damit kann während des Fierens die Zugkraft eines jeden Drachens unabhängig von der Windstärke auf eine konstante Sollzugkraft eingestellt werden. Nach Erreichen der maximal gewünschten Steighöhe wird die Zugkraft minimiert und die Schirme wieder eingeholt.

Die einzelnen Zugdrachen sind netzartig mittels Verbindungsseilen 3 miteinander verbunden.

### Gruppierung von Zugdrachen

Um die Anzahl der Verbindungsseile zur Bodenstationen zu minimieren, wird anstelle einzelner Zugdrachen vorgeschlagen, mehrere miteinander verbundene und gleichmäßig bewegte Zugdrachen zu einer Gruppe zu verbinden. Jeder Zugdrachen innerhalb dieser Gruppe ist hierzu mit seinen benachbarten Zugdrachen netzartig mittels Verbindungsseilen verbunden und benötigt daher nur noch zwei Zugseile zur Zugkrafteinstellung und - Übertragung.

Zur horizontalen Lagefixierung dieser Zugdrachengruppe werden an den Seilumlenkrollen der jeweils äußeren Zugdrachen schräg nach unten verlaufende Positionierungsseile abgespannt wie dies im Prinzip zu Stabilisierung von Zelten bekannt ist. Die beiden Zugseile übernehmen dabei quasi die Funktion der Zeltstangen.

Durch die Verwendung der Positionierseile 4 kann trotz großer Arbeitshöhe eine genaue Positionierung des Zugdrachenverbandes ermöglicht werden, was besonders in größeren Windparks von Vorteil ist, da sich damit der Mindestabstand zu den jeweils benachbarten Zugdrachengruppen minimieren lässt und somit eine intensive Flächennutzung des Windparks erreicht wird.

Die horizontale Ausrichtung der jeweiligen Zugdrachengruppe wird bei Änderung der Windrichtung trotzdem beibehalten. Lediglich die einzelnen Schirme und deren Schirmzugseile drehen sich entsprechend der Windrichtung mit Hilfe eines Drehlagers sowie eines Seilwirbels. Höhenbezogen können die einzelnen Zugdrachen einer jeweiligen Gruppe wahlweise in gleicher Höhe oder auch in einem bestimmten Höhenversatz angeordnet werden. Damit lassen sich bei horizontalen Bewegungen der Drachengruppe Luftverwirbelungen von benachbarten Zugdrachen minimieren.

### Messung der Windrichtung und horizontale Positionierung

Die aktuelle Windrichtung kann durch Messen der jeweiligen Zugkraft und Seillängen der jeweiligen Positionierungsseile bezogen auf die Zugseillängen ermittelt werden.

Die Zugkraft der äußeren Zugdrachen wird aufgeteilt in eine Zugkraft der beiden Zugseile und des seitlich abgespannten Positionierungsseils. Dadurch entsteht eine horizontale Kraft auf die Zugrachenverbindungsseile. Damit kann die Einhaltung des Abstandes der einzelnen Zugdrachen untereinander gewährleistet werden.

Auch lässt sich damit der Zugdrachenverbund in seiner horizontalen Position bezüglich der aktuellen Windrichtung genau ausrichten.

Wird z.B. die Seillänge des rechten Positionierungsseils verkürzt, so verringert sich die Zugkraft des Schirms an den Zugseilen und es entsteht eine Horizontalkraft nach rechts auf das Verbindungsseil zwischen Schirm.

Unterstützt wird dieses Positionieren ergänzend dargestellt, bei einer drohenden Überlast am linken Positionierungsseil die Zugkräfte der Schirme erhöht werden und/oder die Zugkräfte der Zugdrachen etwas verringert werden.

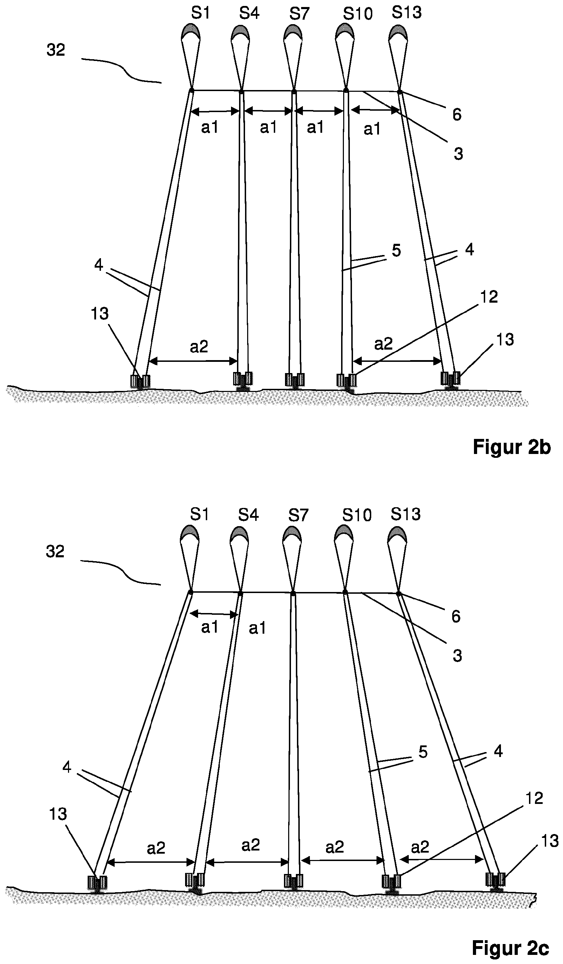

Durch den geringeren Abstand zwischen den Schirmen, verglichen mit dem größeren horizontalen Abstand der jeweiligen Seilwinden kann ergänzend bzw. alternativ zur erhöhten Zugkraft des linken Positionierungsseils noch eine zusätzliche horizontal nach links wirkende Kraft erzeugt werden. Dadurch können auch größere Drachenverbände mit vergleichsweise wenigen Positionierungsseilen oder ganz ohne diese betrieben werden. Figuren 2b und 2c zeigen schließlich einen Zugdrachenverbund, welcher auch ohne zusätzliche Positionierungsseile betrieben wird. Die horizontale Positionierung wird hierbei einzig durch eine relative Zugkraftanpassung der jeweils äußeren Zugdrachen eines jeweiligen Zugdrachenverbandes erreicht.

Mittels dieser Positionierungshilfen kann der Drachenverbund auch Figuren z.B. in Form einer 8 fliegen, was bei geringen Windstärken zu einer Steigerung der nutzbaren Zugkräfte führt. Mit Hilfe des Drehlagers sowie der Wirbel lassen sich auch einfache endlos kreisförmige Bewegungen der Zugdrachengruppe ausführen.

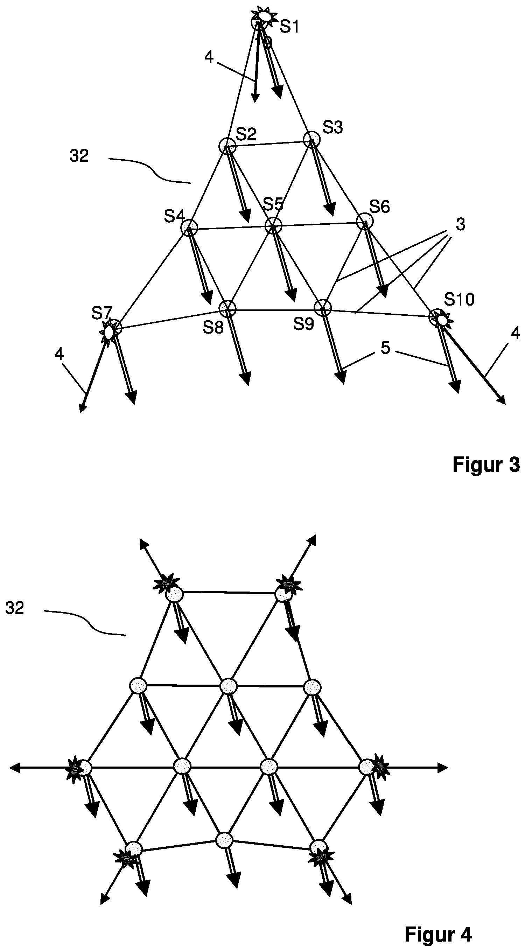

Für eine exakte Positionserfassung der Zugdrachengruppe genügen wie in Figur 3 gezeigt, bereits drei um je 120° versetzte Positionierungsseile 4.

Die Steuerung der Zugkräfte aller in einer Zugdrachengruppe beteiligten Drachen erfolgt durch Messen aller Zugkräfte an sämtlichen Zugseilen. Diese Zugkräfte werden ständig neu berechnet und entsprechend den gewünschten Sollwerten korrigiert. Dies erfolgt durch entsprechend angepasste Fier- oder Einzugsgeschwindigkeit an allen Seilwinden. Dadurch werden Überlastungen an sämtlichen Schirmen, Seilabschnitten sowie an den einzelnen Seilwinden vermieden und die Zugdrachen jeweils optimal bezüglich Windrichtung und Zugkraft positioniert.

Auch können die Fier- und Einzugsgeschwindigkeiten aller Seilwinden so berechnet und damit gewählt werden, dass ein ständiges Optimum an abzugebender elektrischer Leistung bei gleichzeitiger Formstabilität des Zugdrachenverbands sowie ein Schutz vor Überlastung durch Sturmböen erreicht werden kann.

Ein weiterer Vorteil eines Verbandes mehrerer Zugdrachen besteht in der Sicherheit vor einem ungewollten Absturz eines einzelnen Zugdrachens, sei es durch Reißen eines Seils, dem Ausfall einer Seilwinder oder einem defekt an einem der Schirme. Dies ist von besonderer Bedeutung, da diese Zugdrachen in gossen Höhen arbeiten und somit eine Gefährdung im Umkreis der Anlage durch ungewollten Absturz vermieden wird. Ergänzt wird diese Sicherheit durch die Auslegung einer hohen möglichen Einzugsgeschwindigkeit. Diese wird so ausgelegt, dass selbst bei plötzlichem kompletten Windausfall die mögliche Einzugsgeschwindigkeit höher ist als die Sinkgeschwindigkeit der Schirme.

### Arten von Drachenverbänden

Die jeweilige Zusammensetzung, Form und Umfang der an einem Drachenverbund zusammenhängenden Zugdrachen wird anhand der Figuren 3, 4 und 5 dargestellt.

In Figur 3 ist ein kleiner Verbund von 10 einzelnen Zugdrachen dargestellt. Jeder dieser Zugdrachen wird in horizontaler Richtung durch zwei (S1,S7,S10), vier oder 6 (S8) in verschiedene Richtungen verlaufende Drachenverbindungsseile 3 zusammengehalten bzw. auf Abstand zu seinen jeweils benachbarten Zugdrachen gehalten.

Die Figur 4 zeigt eine Gruppe, bestehend aus 12 Schirmen. Figur 5 zeigt weitere mögliche Gruppenanordnungen von z.B. 13 bzw. 19 Schirmen, welche in z.B. rechteckiger sechseckiger Anordnung miteinander verbunden sind und mittels vier, sechs oder gar 12 Positionierungsseilen ausgerüstet sind.

In Figur 5b ist ein größerer Verbund von hier beispielhaft 19 einzelnen Zugdrachen S1-S19 dargestellt. Jeder einzelne Zugdrachen wird horizontal von 6 in verschiedene Richtungen verlaufenden Zugdrachenverbindungsseilen auf Abstand zu benachbarten Zugdrachen gehalten.

An den Rändern sind im horizontalen Winkelabstand von je 60° sechs Positionierungsseile 4 schräg verlaufend zu einer jeweiligen Seiltrommel geführt.

Bei starken Windböen, welche auch noch in ihrer Windrichtung variieren, können die Drachen etwas mehr in Bodennähe betrieben werden. Dadurch vergrößert sich der seitlich Abspannwinkel an den Positionierungsseilen, so dass eine größere Spannkraft zwischen den Zugrachenverbindungsseilen 3 entsteht. Bei schwächerem Wind und konstanter Windrichtung hingegen können die Drachen in eine höhere Lage gebracht werden, da sich die Windkraft mit zunehmender Höhe deutlich steigert.

In Figur 4 ist ein kleiner Verbund von 12 einzelnen Zugdrachen dargestellt, welche durch sechs Positionierungsseilen 4 ausgestattet ist, welche im horizontalen Winkel von jeweils 60° mit ihrer jeweiligen Seilwinde 13 verbunden sind.

### Drehen der Zugdrachen bei drehfesten Seilumlenkrollen

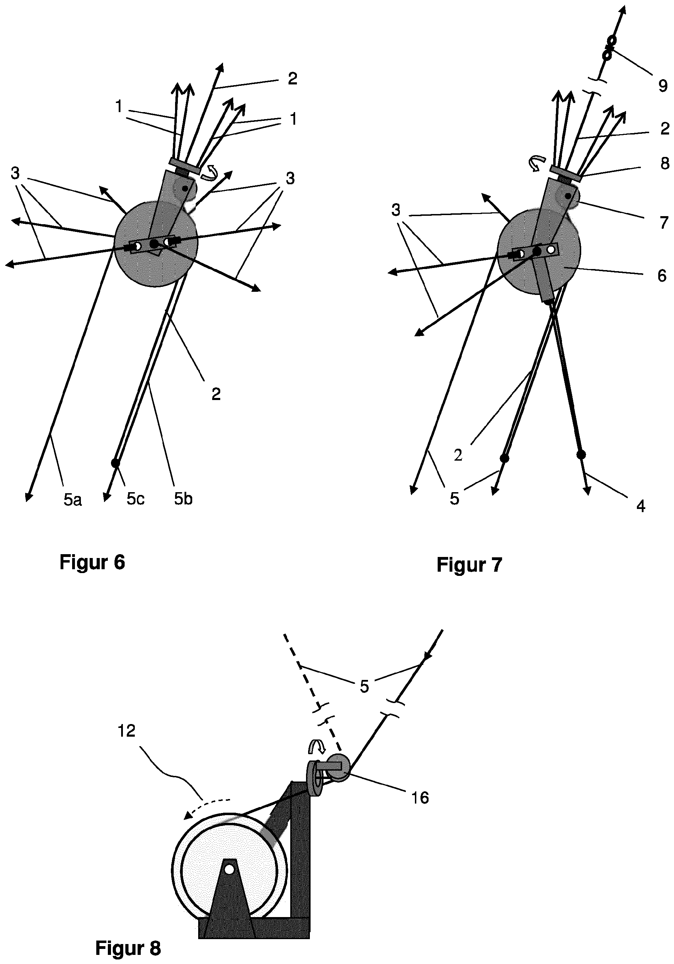

Die Seilumlenkrolle 6 besitzt wie in Figur 6 und 7 dargestellt zwei Seilrillen. Eine Rille ist für die Umlenkung des Zugseils 5 während die zweite Rille das Schirmsteuerseil 2 umlenkt und der Steuerseilumlenkrolle 7 zuführt. Dieses Schirmsteuerseil kann damit die relative Längenänderung der beiden Zugseile an den Zugdrachen weiter übertragen. Dabei wird das Schirmsteuerseil durch eine zentrische Öffnung im Drehlager 8 durchgeleitet. Mittels eines Seilwirbels 9 wird dabei das Verdrillen des Schirmsteuerseils bei rotatorischen Drehbewegungen des Zugdrachens gegenüber der drehfesten Seilumlenkrolle verhindert.

Damit kann die Drachengruppe 32 permanent kreisförmige Bewegungen ausführen, was zu einer Zugkrafterhöhung führt. Mit Hilfe der Wirbel 9 und Drehlager 8 der einzelnen Schirme können diese dabei endlos kreisende Bewegungen ausführen.

### Veränderung der Zugkraft - Schutz gegen Windböen

Starke Windböen können zur Überlastung des Zugseiles oder des Zugdrachens führen.

Durch permanentes Messen der Zugkraft der Zugseile 5 kann mittels Änderung der Relativlängen beiden Zugseile 5 die Zugkraft des Schirms verringert und damit auf den gewünschten Sollwert angepasst werden.

Für einen schnellen und sich automatisch einstellenden Kraftausgleich kann eines der beiden Zugseile mit einer höheren Elastizität ausgeführt werden. Wird wie z.B. in Figur 6 dargestellt, das Zugseil 5a weniger elastisch als das Zugseil 5b ausgeführt, so verringert sich die Länge des Schirmsteuerseils 2, da dieses Schirmsteuerseil mit dem Zugseil 5b verbunden ist. Der selbe Effekt kann auch erzielt werden, indem beide Zugseile 5a, 5b die gleiche Elastizität besitzen, jedoch über das Schirmsteuerseil 2 sich die Zugkraft auf der Seite von Zugseil 5b erhöht und somit auf dieser Seite im Falle von Windböen eine größere Seildehnung auftritt.

Diese Windkraftanlagen sind nicht ortsabhängig und können damit in Nähe von energieintensiven Industriezentren oder als Offshore Anlagen oder auch in tiefen Gewässern installiert werden.

### Drehfeste Bodenstation

Figur 8 zeigte eine drehfest platzierte Seiltrommel 12. Mit Hilfe einer zweiten vertikal drehbaren Umlenkrolle 16 kann das Zugseil 5 bei beliebiger Windrichtung nachführen.

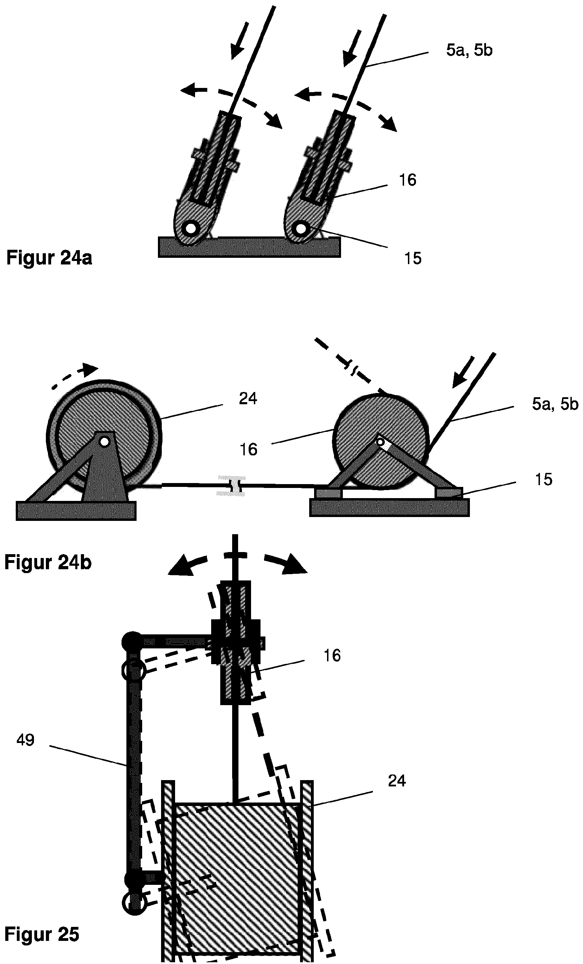

Eine weitere ähnlich wirkende Ausführungsform ist mit den Figuren 24a und 24b dargestellt.

In Figur 25 übernimmt die Seilumlenkrolle auch die Seilführung beim Aufwickeln des Seils auf der Seiltrommel. Seiltrommel und Seilumlenkrolle sind hierfür horizontal drehbar gelagert und werden über eine Führungsstange winkelsynchron angesteuert.

Die Seiltrommel und Seilumlenkrolle werden synchron so nachgeführt, dass das Seil während der Aufwickelphase immer senkrecht zur Seiltrommel verläuft.

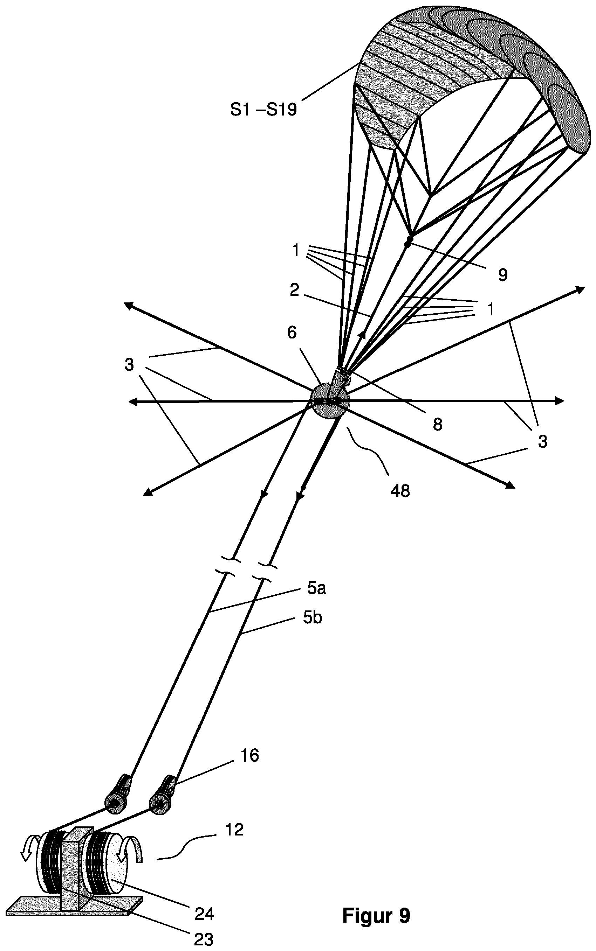

In Figur 9 ist der gesamte Seilverlauf eines einzelnen Schirms dargestellt.

### Offshore-Anwendung

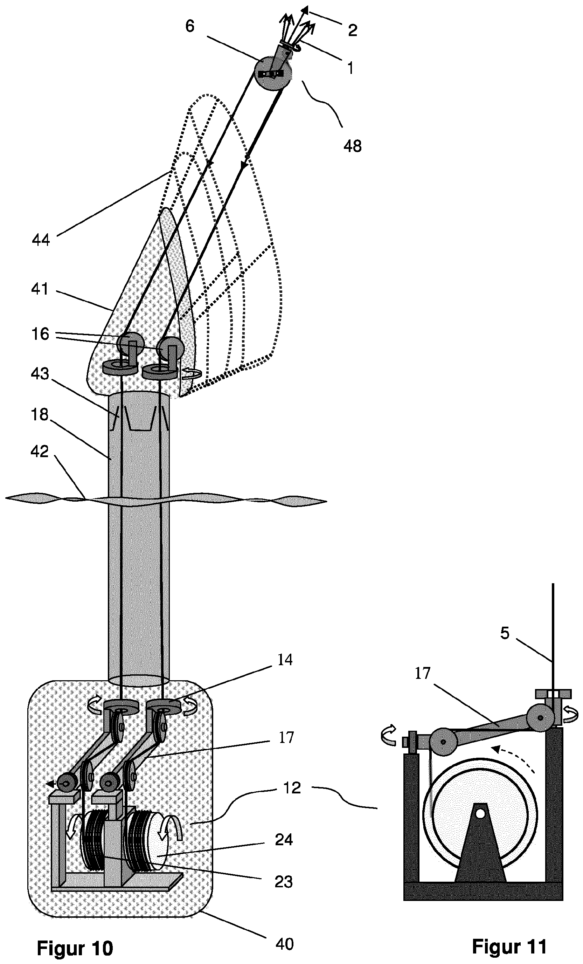

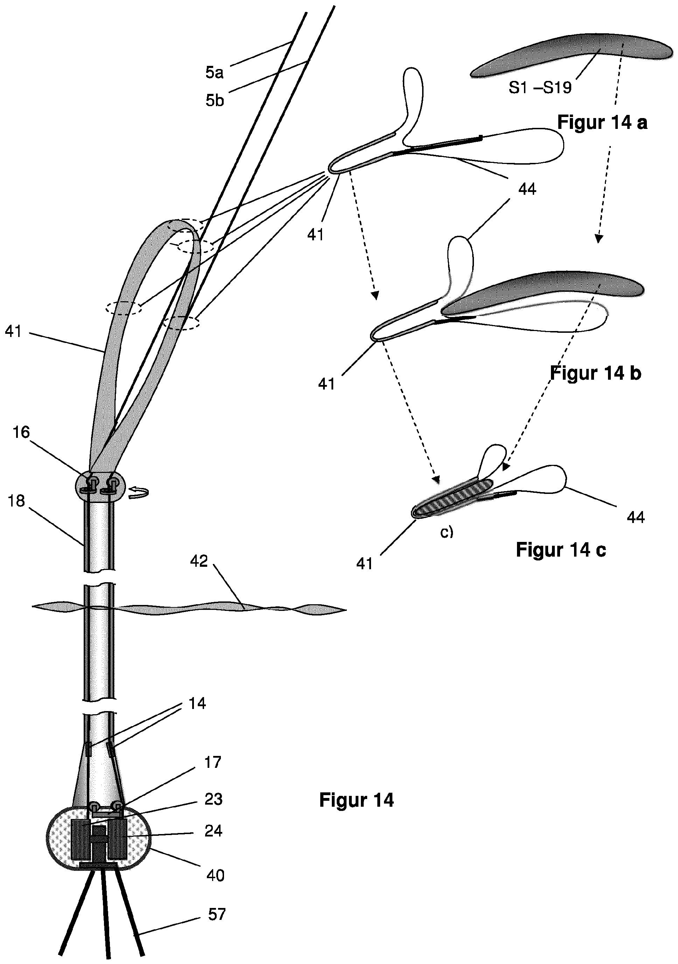

Die Figuren 10 bis 14c zeigen verschiedene Anordnungen von Bodenstation 40 für Offshore-Anwendung mit einer schwimm- bzw. tauchfähigen Bodenstation 40, welche sturmfest unter Wasser platziert ist (Siehe Figur 14). Lediglich eine Art Schnorchel 18 ragt dabei aus dem Wasser.

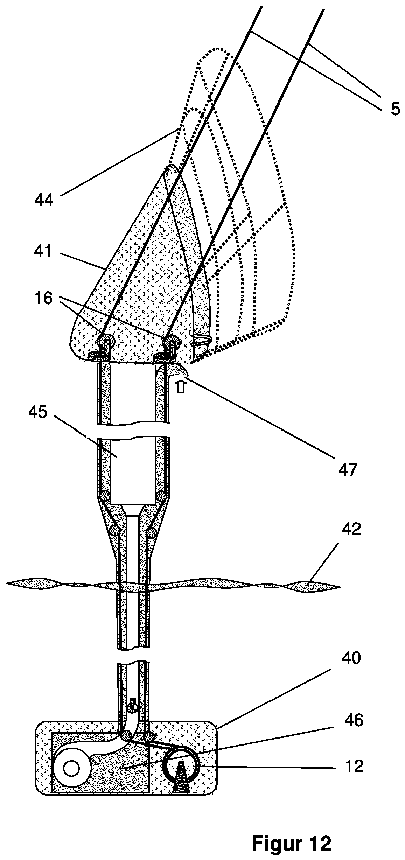

Mittels Umlenkrollen 16 werden die beiden Zugseile windrichtungsabhängig umgelenkt. In den Figuren 10 und 12 wird der Schirm bei Sturm in einem sicheren Stauraum des geschützt.

Die Bodenstation beherbergt die beiden Seiltrommeln 24 und ist unterhalb der Wasseroberfläche angeordnet. Dieser Raum ist so tief unter Wasser platziert, dass m Falle eines Sturms der Wellengang weitgehend oberhalb der Bodenstation ist.

Mittels einer Verankerung 57 wird die Bodenstation ortsfest fixiert (Siehe Figur 14).

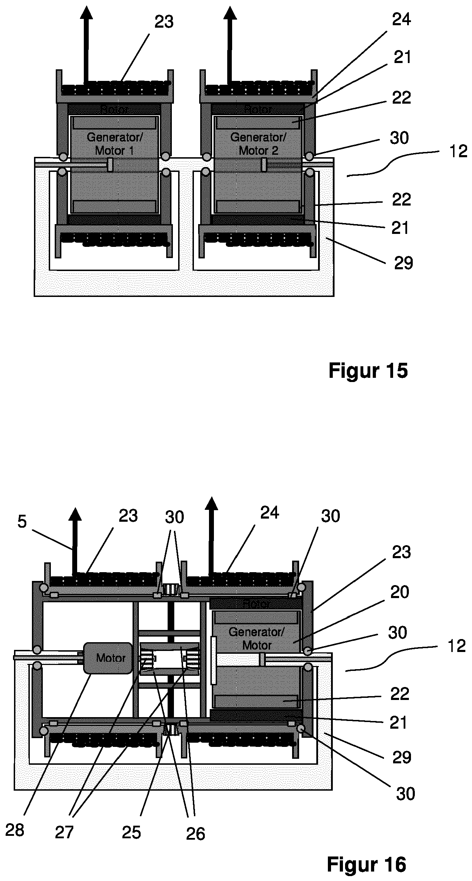

In den Figuren 15 und 16 wird jeweils eine Bodenstation zur Aufnahme von zwei Zugseilen 5 gezeigt. In Figur 16 wird eine Bodenstation gezeigt, welche für beide Seiltrommeln eine gemeinsame Seiltrommel verwendet. Mittels eines Differentialgetriebes kann ein Verstellmotor eine relative Längenänderung zwischen beiden Zugseilen 5a und 5b bewirken.

### Stromerzeugung mittels Höhenwindrädern alternativ zu Zugdrachen

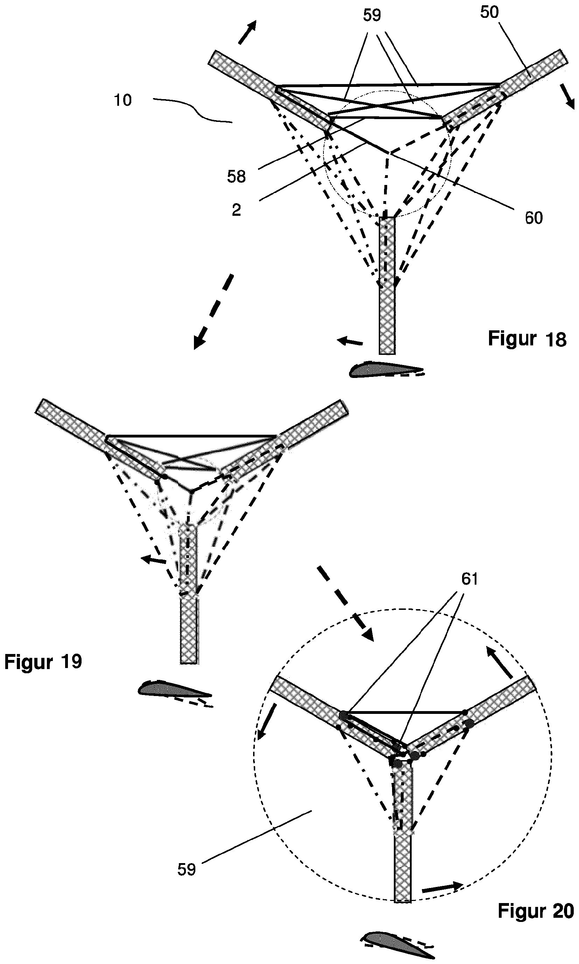

In Figur 18 bis 20 werden an Stelle von Zugdrachen rotierende Festflügelräder 50 gezeigt. Die Lagesteuerung einer Gruppe von Höhenwindrädern arbeitet weitgehend identisch wie die bereits oben beschriebenen Zugdrachen.

Mittels einer Umlenkrolle 6 wird die Zugkraft gleichmäßig auf die beiden Zugseile verteilt. Ein Ändern der Relativlänge beider Zugseile zueinander ermöglicht über das Schirmsteuerseil 2 eine Flügelradverstellung. Die zugkraftabhängige Seillängenausdehnung wird auch bei diesem Lösungsansatz durch die Umlenkrolle 6 kompensiert.

Die Zugseilumlenkrolle 6 und die Querverbindungsseile 3 sind horizontal drehfest angeordnet

Das Rotieren des Flügelrads wird durch ein Drehlager 8 und einen Seilwirbel 9 ermöglicht.

Ein am Drehlager angebrachter Sensor misst den Drehwinkel des Flügelrads und sendet diese Daten an die Bodenstation.

Auch diese Flugwindkraftanlagen arbeiten in zwei Arbeitsphasen

### 1. Phase: Stromerzeugung (Starthöhe z.B. 200 m)

Die Gruppe von Windrädern wird durch den Wind in Rotation versetzt und dadurch in die Höhe gezogen. Durch die Rotation der Flügelräder wird wie bei klassischen Windrädern die Wirkfläche für die Flugkraft erhöht. Dabei durchstreichen die Flügel eine große Windfläche 59 und erzeugen ein Maximum an Zugkraft.

### 2. Phase: Einholen der Windräder (z.B. aus 500 m Höhe)

Der Anstellwinkel der Windräder wird so verstellt, dass die Flügelräder ihre Drehrichtung wechseln und im steilen Sturzflug mit geringer Zugkraft nach unten zur Ausgangshöhe absinken. Dabei wird auch der Durchmesser des Flügelrades minimiert, indem die Flügel Richtung Rotationsmittelpunkt gezogen werden(Siehe Figur 20). Ist der Sinkflug beendet, so wird der Anstellwinkel der Flügelräder wieder zurückgestellt und die Drehrichtung wechselt zurück. Die Flügelräder breiten sich wieder aus (Siehe Figur19,18) und beginnen wieder durch fierendes aufsteigen Strom zu erzeugen.

Am Boden wird durch Ausziehen der beiden Zugseile je ein Generator zur Stromerzeugung angetrieben. Ein voller Zyklus dauert ungefähr 1-2 Minuten
Die Zugkraft der Rotorflügel ist steuerbar mittels relativer Längenverstellung der beiden Zugseile. Vor der Landung wird die Rotation der Flügelräder gestoppt und die Flügel mit Hilfe eines Winkelsensors automatisch in eine vorgegebene Winkelposition gebracht.

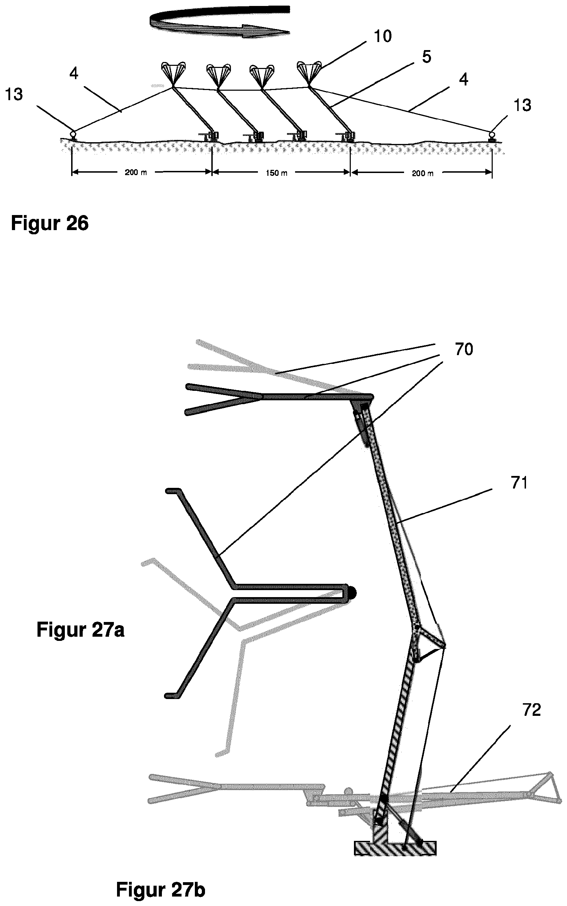

Zur Landung setzen die Flügelräder auf einem Flügelradhalter 70 auf und werden sturmsicher gehalten. Zum Neustart werden diese Flügelräder vollautomatisch aus ihrer Halterung 70 gelöst und durch kreisende Bewegungen der gesamten Gruppe (Siehe Figur 26) wieder hochgezogen.

### Funktion der Flügelräder

Jedes Flügelrad besteht aus drei einzelnen Einzelflügeln 50.

Diese Flügel können sehr leicht ausgeführt werden, da sie ähnlich wie Lenkdrachen über deren Länge an mehreren Stellen durch Halteseile 1 (54) gehalten werden.

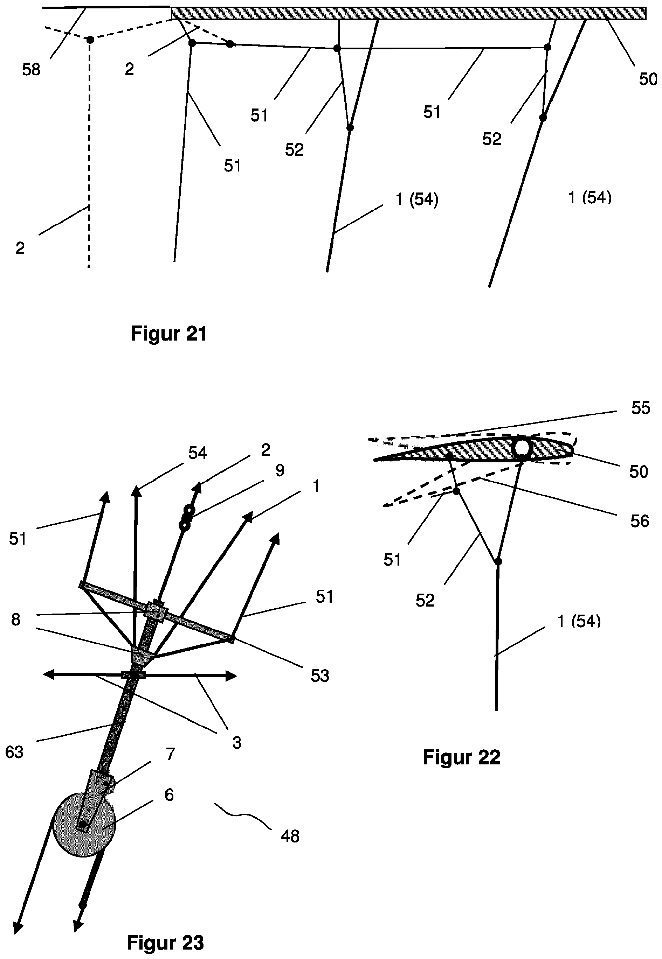

Mittels Flügelpositionierseilen 58 werden (wie in Figur 18 und 21 gezeigt) die einzelnen Rotorflügel miteinander verbunden und fixiert. Je drei zusätzliche Fixierseile 59 sind in Flügelmitte befestigt und sorgen im ausgebreiteten Zustand für eine Formstabilität des Flügelrads.

Die Halteseile 58 der einzelnen Flügel werden über Umlenkrollen 61 geführt und sind im Drehmittelpunkt 60 mit dem Steuerseil verbunden.

Mit Hilfe des Steuerseils 2 kann die Wirkfläche 59 und damit die Zugkraft der Rotorflügel variiert werden. Bei schwachem Wind sind die drei Rotorflügel weit voneinander getrennt (siehe Figur 18), so dass diese eine maximale Wirkfläche erreichen. Das Steuerseil im Drehmittelpunkt ist während des Fierens zugentlastet.

Mit zunehmender Windstärke werden durch Einziehen des Steuerseils 2 die Rotorflügel näher zum Drehmittelpunkt gezogen, so dass sich die Wirkfläche der Rotorflügel reduziert.

Dazu werden über das Steuerseil 2 im Drehmittelpunkt 60 die Halte- und Fixierseile 58 und 59 eingezogen. Die über kreuz angeordneten Fixierseile 62 behalten ihre Ursprungslänge.

Die Wirkfläche der Rotorflügel verkleinert sich, wodurch sich die Zugkraft der Flügel auch reduziert.

Bei weiter steigender Windstärke wird die Wirkfläche der Rotorflügel schließlich minimiert (Siehe Figur 20) was zu einer weiteren Reduzierung der Zugkraft führt. In dieser Stellung kann auch bei Turbolenzen und hohen Windgeschwindigkeiten eine sichere Form des Flügelrads sichergestellt werden.

Wird das Schirmsteuerseil 2 noch weiter eingezogen, so kann wie in Figur 21, 22 gezeigt, der Anstellwinkel des Flügels gänzlich beseitigt werden, so dass das Flügeklrad aufhört zu rotieren. Dadurch findet eine weitere Reduzierung der Zugkraft statt.

Die Anstellwinkelverstellung erfolgt durch einziehen des Steuerseils 2, wodurch das Steuerseil 51 nach rechts bewegt wird (Siehe Figur 21 und 22). Dadurch verkürzt sich die Seillänge des Zugseils 52, wodurch der Anstellwinkel verändert wird (Siehe Figur 22).

Im normalen Rotationsbetrieb sorgt ein Anstellwinkel α > 90° für ein Rotieren des Flügelrades in Vorwärtsrichtung. Über das Flügelzugseil 1 wird ein Großteil der Zugkräfte des Flügelauftriebs abgeleitet. Ein Positionierseil 52, welches mit dem Flügelzugseil verbunden ist, bestimmt den Anstellwinkel während des Normalbetriebs (Siehe Figur 22).

Mit Berühren der Flügelinnenkanten stellt sich mittels der Steuerseile 2, 51, 52 ein negativer Anstellwinkel von α < 90 ° ein, so dass die Flügel beginnen sich rückwärts zu drehen.

Während der Landephase ist es damit möglich, durch entsprechendes Ziehen am Steuerseil die Drehwinkelposition des Flügelrads bezogen auf die Haltevorrichtung wunschgemäß einzuregeln. Ein am Drehlager 8 platzierter Winkelsensor misst dazu ständig den Drehwinkel des Flügelrads und meldet diesen per Funk an die Bodenstation.

### Rotationsabhängige Anstellwinkelverstellung

Um sicherzustellen, dass das Flügelrad 10 sich im Betrieb in gewünschter Zugrichtung der Zugseile 5 befindet, wird ähnlich wie bei der Steuerung von Hubschraubern eine rotationsabhängige Verstellung des Flügelanstellwinkels vorgenommen.

Diese Funktion wird in Figur 23 dargestellt. Ein Rohr 63 führt die Zugrichtung der Umlenkrolle über den Anbindungspunkt der Zugdrachenverbindungsseile 3 hinaus. An seinem oberen Ende befinden sich zwei Drehlager 8. Am unteren der beiden Drehlager 8 werden die drei Schirmzugseile 1 (54) befestigt, während am oberen Drehlager 8 eine Stange 53 angeordnet ist, welche an ihrem äußeren Ende das Steuerseil 51 zur rotationsabhängigen Anstellwinkelverstellung fixiert.

Ändert das Flügelrad seine Zugrichtung gegenüber dem Rohr 63, so verstellt sich die Relativlänge des Schirmzugseils 1 bezüglich der Länge des Steuerseils 51. Diese Längenänderung setzt sich in einer Zugbewegung des Steuerseils 51 fort und führt zu einer Längenänderung des Zugseils 52. Damit wird erreicht, dass sich der Anstellwinkel des Flügels rotationsabhängig verstellt. Damit stabilisiert sich die Zugrichtung des Flügelrades gegenüber dem Winkel der Zugseile 1. Durch die Verstellung mittels Zugseilen kann eine robuste dauerhafte Funktion der rotationsabhängigen Anstellwinkelsteuerung geschaffen werden.

### Haltevorrichtung der Flügelräder

Die Aufnahmevorrichtung dient zur geschützten Aufbewahrung eines Flügelrads während Windflaute, Gewittersturm oder bei einem Anlagenservice.

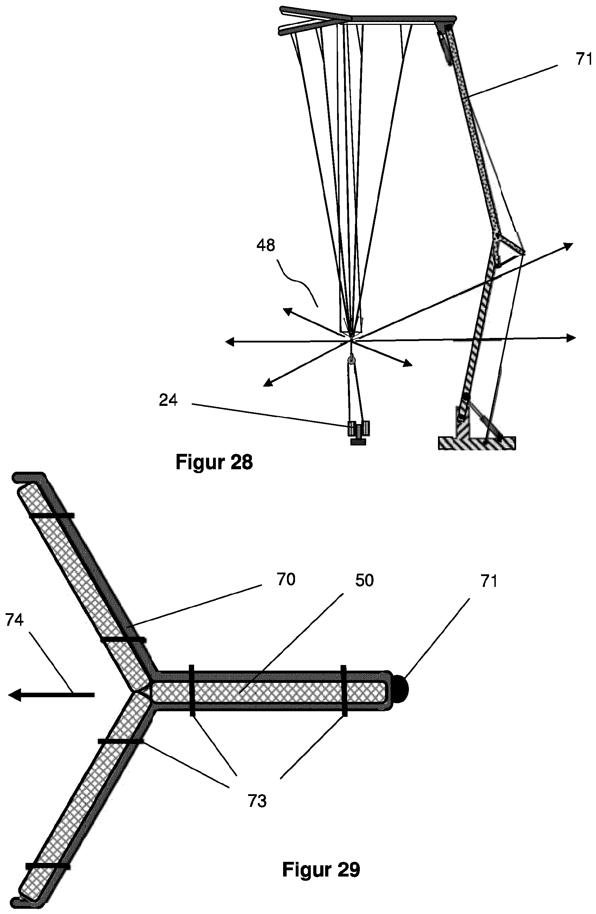

Die Schirmaufnahme des Flügelradhalters 70 hat wie in den Figuren 27a und 27b dargestellt, eine vertikale Verstellmöglichkeit und ist horizontal drehbar gelagert. Diese Landevorrichtung ist in seiner Höhe so ausgelegt, dass die Flügelzugseile samt Zugseilumlenkrolle 24 nicht bis zur Seiltrommel 24 reichen (siehe Figur 28). Für Servicezwecke ist diese Landevorrichtung einklappbar 72 ausgeführt.

Direkt nach der Landung werden die Flügel von Haltebügeln 73 umfasst, so dass eine sturmsichere Aufbewahrung sichergestellt ist. Die Haltevorrichtung ist während Start und Landung ausgefahren. Direkt nach Abheben des Flügelrads wird die Haltevorrichtung eingefahren.

### Start und Landung der Gruppe von Flügelrädern

### Einholen der Flügelräder

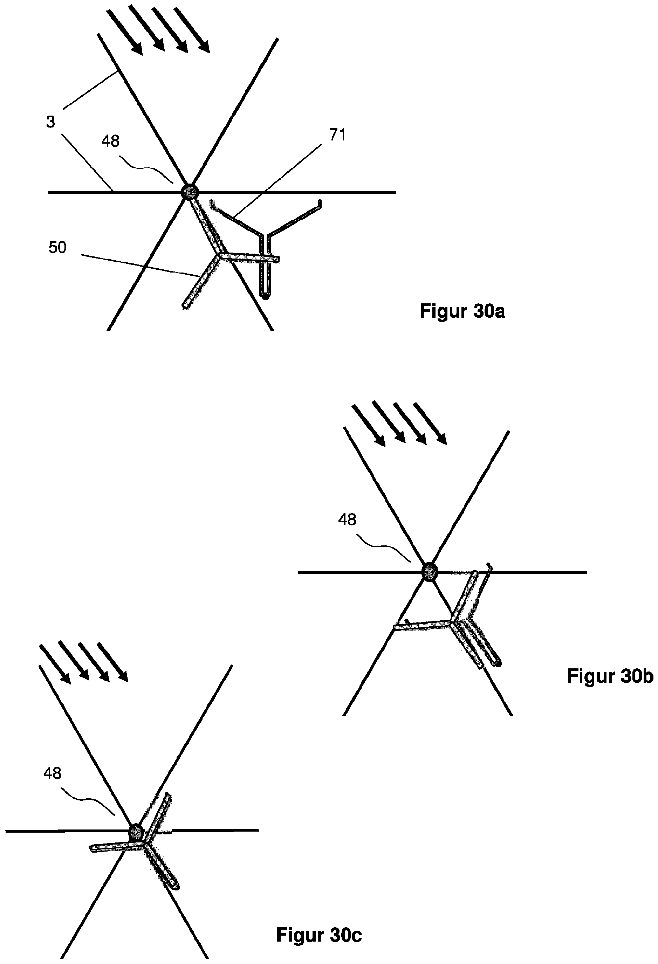

Während des Landevorgangs ist der Flügelradhalter 70 ausgefahren und horizontal so positioniert, dass keine seiner Aussenkanten die Querverbindungsseile berührt (siehe Figur 30a). Die Querverbindungsseile 3 werden mittels der Seiltrommeln 13 so angesteuert, dass die beiden Zugseile 5 des Flügelrads 70 nahe der linken Aussenkante entlang gleiten.

Sobald die Querverbindungsseile unterhalb des Flügelradhalters 70 angelangt sind, wird dieser gedreht (siehe Figur 30b). Gleichzeitig wird der Profilanstellwinkel α des Flügelrads 50 so angesteuert, dass der Drehwinkel der Flügel genau passend zum Flügelradhalter 50 ausgerichtet ist.

Nun werden die Querverbindungsseile 3 mittels der Seiltrommeln 13 so angesteuert, dass sich die beiden Zugseile 5 des Flügelrads 50 unterhalb des Flügelradhalters positionieren.

Die Flügelzugseile 1 befinden sich damit automatisch innerhalb des Flügelradhalters.

Das Flügelrad liegt nun wie in Figur 30c in der Form des Flügelradhalters 71 auf. Die Haltebügel 73 werden ausgefahren und umklammern das Flügelrad 50.

Der Flügelradhalter wird eingefahren (siehe Figur 27b). Das Flügelrad ist nun geschützt vor Sturm am Boden angelangt.

Alle Flügelräder werden dabei gleichzeitig eingefahren.

### Neustart der Flügelräder

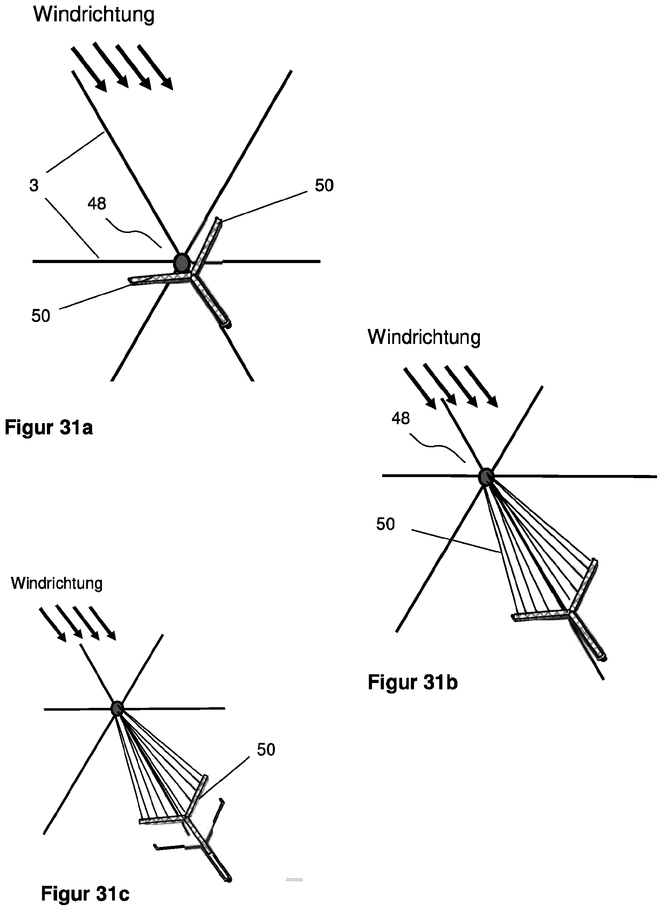

Das erneute Starten der Gruppe von Flügelrädern (Siehe Figuren 31 a bis 31c) erfolgt mit Hilfe der Querverbindungsseile 3. Dazu bilden die Seiltrommeln 13 der seitlichen Querverbindungsseile 4 ein gespanntes Gitternetz. Dieses Gitternetz bewegt sich auf die aktuelle Windrichtung zu. Die Haltebügel 73 umklammern die Flügelräder 50 noch, so dass die Flügelzugseile 1 beginnen sich zu spannen.

Ist die Spannung aufgebaut, so öffnen sich die Haltebügel 73 an allen Flügelräder 50 gleichzeitig und geben diese frei (Siehe Figur 31c).

Das Gitternetz beschleunigt seine horizontale Bewegung gegen den Wind.

Die Flügelräder werden rasch vom Flügelradhalter 70 weggezogen und beginnen anzusteigen. Die Flügelradhalter 71 werden rasch eingefahren 72 damit sich die Querverbindungsseile 3 nicht darin verfangen.

Mittels der Positionierseile wird wie in Figur 26 gezeigt, die Gruppe von Flügelrädern nun kreisförmig bewegt, so dass die Flügelräder immer weiter hochgezogen werden.

Die Querverbindungsseile 3 (Gitternetz) bewegen sich dabei kreisend aber drehfest.

### Überlastschutz

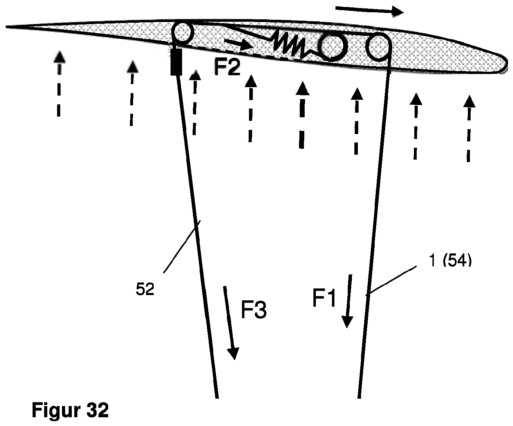

Zur Gewichts- und Kostenoptimierung der Zugseile und der Flügel wird eine Begrenzung der Zugkraft in den Flügeln angebracht. Das Flügelzugseil 1 tritt wie in Figur 32 gezeigt, im Vorderbereich in den Flügel ein, wird über zwei Umlenkrollen umgeleitet und anschließend an der rechten Seite (Siehe Figur 32) des Flügelprofils wieder herausgeführt. Eine Feder im Innern des Flügels zieht das Seil 52 nach oben gegen einen Anschlag. Die Summenkraft des Windes auf den Flügel liegt mehr auf Flügelzugseilseite 1, so dass eine Kraft auf die Zugfeder wirkt. Bei einer starken Windböe übersteigt die Kraft F3 die Summe der beiden Kräfte F1 + F2, was zur Dehnung der Feder und einem Anheben der linken Fügelseite führt. Damit wird eine Entlastung des Flügels und der Zugkräfte am Zugseil 1 erreicht.

### Figurenbeschreibung

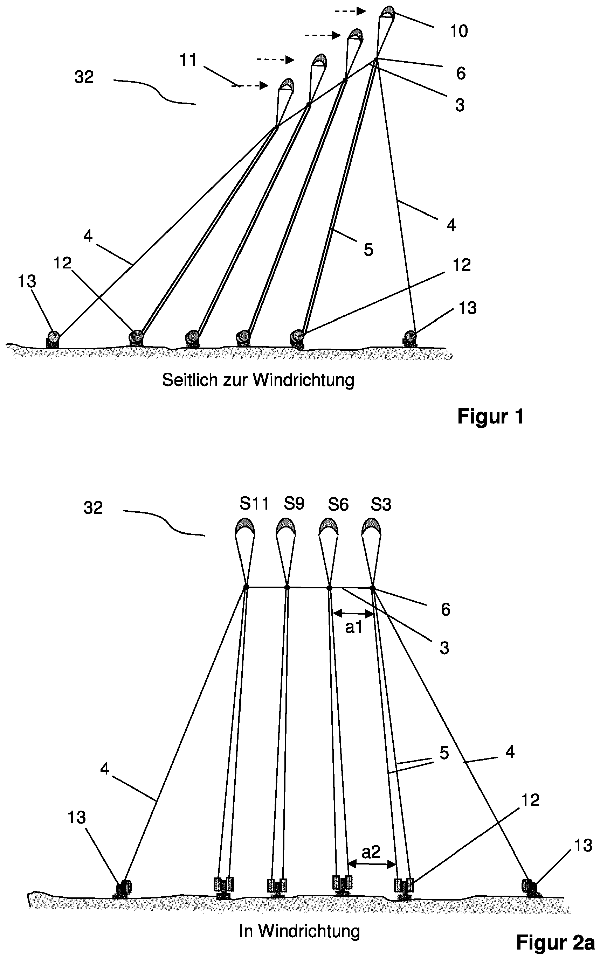

Figur 1 zeigt eine schnittartige seitliche Darstellung eine Schirmgruppe 32 quer zur Windrichtung, bestehend aus vier Schirmen 10 mit jeweils dargestellten Zugseilen 5 und zwei seitlichen Führungsseilen 4
Figur 2a zeigt wie in Figur 1 eine schnittartige Darstellung dieser Schirmgruppe 32 in Windrichtung (von vorn)
Figuren 2b und 2c zeigen eine gleiche Anordnung dieser Zugdrachengruppe
Figur 3 zeigt in einer Draufsicht eine Gruppe von zehn Zugdrachen 10, welche durch netzartige Verbindungsseile 3 aneinander verbunden sind und durch drei weitere Führungsseile 4 in ihrer horizontalen Position (um jeweils 120 ° versetzt) geführt werden.
Figur 4 zeigt in ähnlicher Weise wie Figur 3 in einer Draufsicht eine etwas größere Gruppe von 12 Zugdrachen, welche in diesem Beispiel durch sechs Führungsseile 4 in ihrer horizontalen Position um jeweils 60 ° versetzt, horizontal geführt werden.

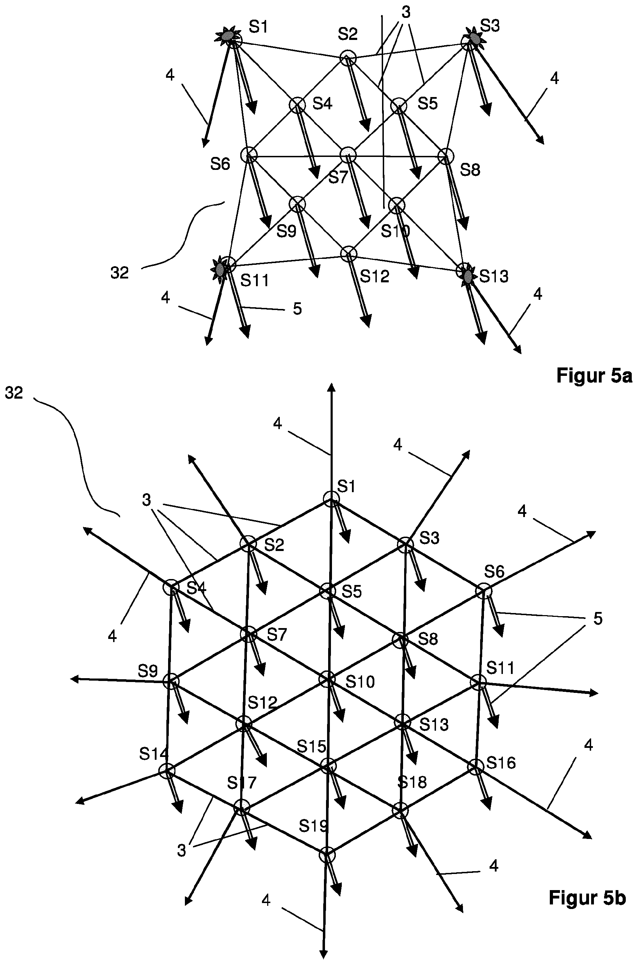

Figur 5 schließlich zeigt in ähnlicher Weise wie Figur 3 und 4 in einer Draufsicht zwei weitere Gruppen von 13 und 19 Zugdrachen
Figur 6 zeigt die Anbindung der beiden Zugseile am Zugdrachen am Beispiel eines Zugdrachens in mittlerer Anordnung innerhalb einer Gruppe von Zugdrachen mit vier Positionierungszugseilen
Figur 7 zeigt eine Detaildarstellung einer gleichen Umlenkrolle 6, hier jedoch einer am Rand einer Zugdrachengruppe 32 mit einem zusätzlichen, schräg nach unten gespannten Positionierungsseil 4
Figur 8 zeigt eine ortsfest platzierte Seiltrommel für Onshore-Anwendungen in Seitenansicht mit einer vertikal drehbar gelagerten Umlenkrolle
Figur 9 zeigt einen kompletten Anlagenaufbau einer Doppel-Seiltrommel 23, 24 einschließlich eines Zugdrachens 10 mit abgehenden Verbindungsseilen 3 in verschiedene Richtungen
Figur 10 zeigt wie Figur 8 eine Bodenstation für Offshore-Anwendung mit einer schwimm- bzw. tauchfähigen Bodenstation mit einer Vorrichtung zur Seilführung 17
Figur 11 zeigt in einer Seitenansicht die Seilwinde 12 mit einer Vorrichtung zur Seilführung
Figur 12 in einer weiteren Ausführungsform eine Bodenstation für Offshore-Anwendung. Ein Stauraum 45 nimmt bei Sturm den Schirm auf, während ein Gebläse zur Wiederinbetriebnahme den Schirm entfaltet.

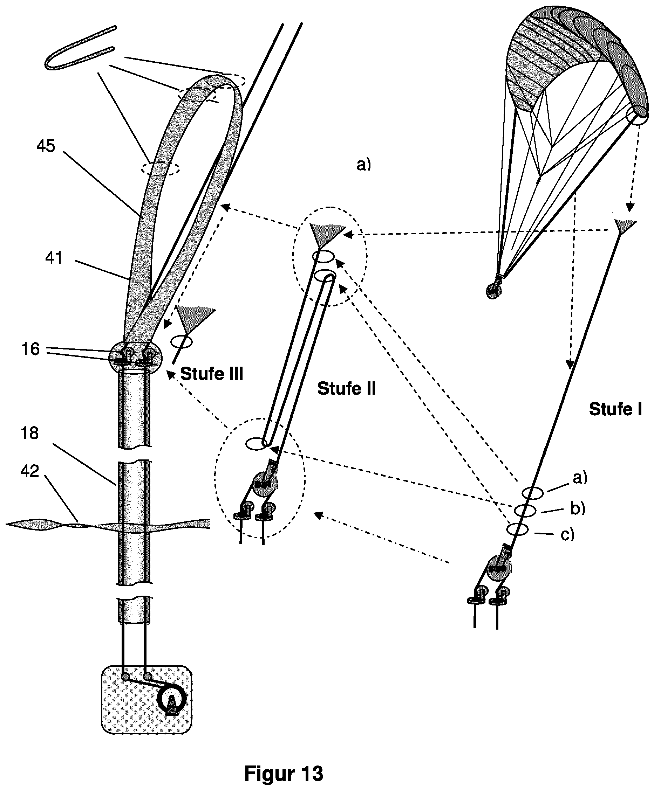

Figur 13 zeigt wie Figur 12 eine weitere Anordnung eine Bodenstation für Offshore-Anwendung mit Seiltrommel in Seitenansicht. Im Falle eines Sturm nimmt hierbei eine ovale U-Profilförmige Vorrichtung den Schirm in sich auf
Figur 14 zeigt wie Figur 12 und 13 eine weitere Ausführungsform einer Schirmaufbewahrung während eines Sturms.
Figuren 14 a bis 14c zeigen verschiedene Phasen des Schirmeinholens
Figur 15 zeigt eine Zweifach-Seilwinde mit jeweils separatem Generator/Motor für jede Seiltrommel
Figur 16 zeigte eine gleiche Zweifach-Seilwinde mit gemeinsamem Generator/Motor für beide Schirmzugseile. Ein separater Steuermotor 28 an einem Differentialgetriebe 25,26 steuert die Differenz der beiden Zugseile 5a und 5b auf den Seiltrommeln

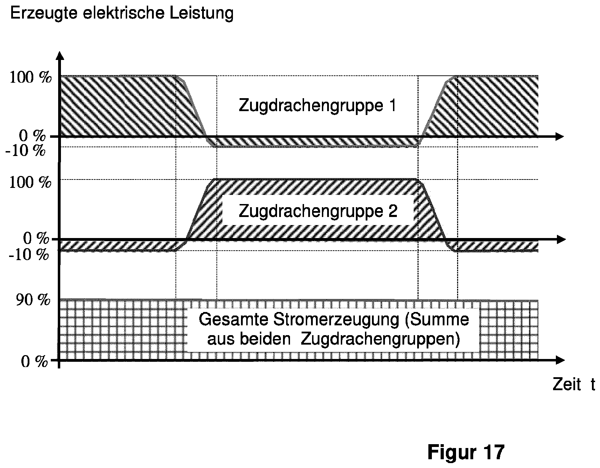

Figur 17 zeigt den zeitlichen Verlauf der aufgenommenen bzw. abgegebenen Leistung zweier gegenläufig betriebenen Zugdrachengruppen sowie die letztendlich insgesamt abgegebene Leistung.
Die Figuren 18a bis 20 zeigen in Draufsicht an Stelle eines Zugdrachens ein Flügelrad, bestehend aus drei einzelnen rotierenden Flügeln
Figur 18 zeigt dieses Flügelrad in normaler Arbeitsstellung während des Fierens mit weit ausgebreiteten Flügeln, welche nur mittels Seilen miteinander verbunden sind
Figur 19 zeigt dieses Flügelrad im Übergang des zusammenziehens der drei Flügel zur Drehmitte hin
Figur 20 schließlich zeigt das Flügelrad in vollständig zusammengezogener Stellung während des Einholens, wobei hier die Flügel miteinander Verbunden sind und das Flügelrad in umgekehrter Drehrichtung rotiert
Figur 21 zeigt einen mittels Seilen gehaltenen Flügel von vorn, welche rotationsabhängig den Anstellwinkel anpasst
Figur 22 zeigt im Profil den gleichen Flügel in seinen verschiedenen Anstellwinkeln
Figur 23 zeigt die Umlenkrolle mit den beiden Zugseilen sowie eine rotationsabhängige Verstellvorrichtung für den Anstellwinkel des Flügelrades
Figur 24a und 24b zeigen in unterschiedlicher Seitenansicht die Anordnung der Seiltrommel sowie der Umlenkrolle
Figur 25 zeigt eine drehbare Seiltrommel in Draufsicht. Die Umlenkrolle übernimmt hierbei die Seilführung während des Seilaufwickelns
Figur 26 zeigt, wie während des Starts der Flügelräder mit Hilfe der äußeren Seilwinden mittels kreisender Bewegungen angehoben werden. Damit können die Flügelräder auch bei Windstille bis auf eine gewisse Anfangshöhe hochgezogen werden
Figur 27a und 27b zeigt in einer Seitenansicht eine Haltevorrichtung zur Aufnahme eines Flügelrades
Figur 28 zeigt ebenfalls in Seitenansicht die Haltevorrichtung mit Flügelrad
Figur 29 zeigt in Draufsicht das in der Haltevorrichtung platzierte Flügelrad Die Figuren 30a bis 30c zeigen in Draufsicht ein Flügelrad während des Einholens
Figur 30a zeigt die Anordnung während die Querverbindungsseile sich noch oberhalb der Haltevorrichtung befinden
In Figur 30b sind die Querverbindungsseile bereits unterhalb der Haltevorrichtung
In Figur 30b ist das Flügelrad schließlich in der Haltevorrichtung platziert
Die Figuren 31a bis 31c zeigen in Draufsicht dieses in Figuren 30 gezeigte Flügelrad während des Startvorgangs
In Figur 31a befindet sich das Flügelrad noch in der Haltevorrichtung und ist dort festgehalten
In Figur 31b werden die Querverbindungsseile mit Hilfe der äußeren Seiltrommeln entgegen der Windrichtung derart bewegt dass die Zugseile der Flügel angespannt sind
Figur 31c sind die Halteklammern gelöst, so dass das Flügelrad seitlich aus der Haltevorrichtung herausgezogen wird und zu steigen beginnt
Figur 32 zeigt in einer Schnittdarstellung des Flügels die Funktion eines Überlastschutzes

### Bezugszeichenliste

1 Schirmzugseile
2 Schirmsteuerseil
3 Zugrachenverbindungsseil
4 Positionierungszugseil
5a Zugseil 1
5b Zugseil 2
5c Befestigung des Schirmsteuerseils 2 mit Zugseil 2
6 Seilumlenkrolle zur Kraftverteilung der beiden Zugseile
7 Steuerseilumlenkrolle für Schirmsteuerseil
8 Drehlager mit Innendurchgang für Schirmsteuerseil 2
9 Seilwirbel
10 Einzelner Zugdrachen oder Höhenwindrad
11 Windrichtung
12 Zweifach-Seilwinde mit Generator/Motor zur Stromerzeugung
13 Seilwinde eines Zugdrachens am Rand der Drachengruppe zur horizontalen Steuerung der Drachengruppe
14 Seilumlenkrolle
15 kippbar gelagerte Umlenkrolle
16 Windrichtungsabhängig vertikal drehbar gelagerte Seilumlenkrolle
17 Drehbare Seilführungsschiene
18 Schnorchel für Offshore Betrieb bei unter Wasser platzierter Seilwinde oder Mast
19 Nachtbefeuerung
20 Generator/Motor
21 Rotor
22 Stator
23 Seiltrommel Seil 1
24 Seiltrommel Seil 2
25 Ausgleichskegelrad zwischen Stirnverzahnungen der Seiltrommeln
26 Wellenrad
27 Ausgleichskegelrad
28 Verstellmotor zur Zuglastanpassung
29 Befestigungsrahmen
30 Kugellager Seilwinde
31 Stirnverzahnung
32 Zugdrachengruppe
40 Bodenstation mit Doppel-Seilwinde tauchdicht
41 Sturm- und Regenschutzkappe drehbar gelagert zur Schirmaufnahme
42 Wasseroberfläche
43 Wasserabscheider verhindert Eindringen von Wasser
44 Schirmeinfanghilfe Federdraht
45 Stauraum des bei Sturm eingeholten Schirms
46 Gebläse für Schirmentfaltung
47 Ansaugkanal für Gebläse
S1 .. S19 Durchnummerierung einzelner Schirme in einer Gruppe von Zugdrachen
48 Schirmhalter bestehend aus Seilumlenkrolle, Drehlager und Schirmseilen
49 Führungsstange zur Seilführung beim Aufwickeln des Seils
50 Einzelner Flügel Höhenwindrad
51 Steuerseil zur rotationsabhängigen Anstellwinkelverstellung
52 Zugseil zur Verstellung des Flügelanstellwinkels
53 Stange für Auslagerung der Steuerseilanbindung
54 Zugseil für Flügel
55 Flügelanstellung im Fiermode vorwärts rotierend
56 Flügelanstellung im Sinkmode rückwärts rotierend
57 Verankerung der Bodenstation am Meeresboden
58 Flügelpositionierseil
59 Wirkfläche der Rotorflügel
60 Anbindepunkt für Steuerseil
61 Umlenkrolle
62 Fixierseil
63 Steifes Röhr als Verlängerung der Umlenkrolle
70 Haltevorrichtung für Flügelrad dreh- und höhenschwenkbar
71 Einklappbarer Haltemast für Flügelrad
72 Flügelradhaltemast in eingefahrenem Zustand
73 Halteklammern zur Flügelradfixierung klappbar
74 Bewegungsrichtung des Flügelrads während dem Start
101 Kanister mit Solarflüssigkeit
102 Solarflüssigkeit
103 Druckbehälter z.B. kugelförmig
104 Einfülldeckel mit integriertem Überdruckventil
105 Druckluftschlauch
106 Rückflussverhinderer ca. 150 mbar Öffnungsdruck z.B. integriert in Anschlussverschraubung ¾" zur Einspeisung in Solaranlage
107 Automatischer Entlüfter
108 Rückflussverhinderer ca. 20 mbar Öffnungsdruck
109 Rückflussverhinderer ca. 20 mbar Öffnungsdruck
110 Füllschlauch zur Solaranlage
111 Nachfüllschlauch zur Nachfüllung der Solarflüssigkeit aus dem Kanister
112 Saugschlauch zur Entnahme der Solarflüssigkeit
113 Druckluftzufuhr zum Befüllen und Luftauslass zum Nachfüllen
114 Einspeisung in Solaranlage
115 Im Verschlussdeckel integriertes Überdruckventil z.B. 2-4 bar
200 Komplette Meeresspeicher
201 Speicherdeckel, -Boden
202 Kreisrunde, radiale Seitenwand
203
204 Wasserkissen, in drei Kammern aufgeteilt
205 Bodenfolie des Wasserkissens
206 Meeresboden
207 Von Folie umschlossenes Speicherwasser außerhalb des Speichers
208 Maschinenraum
209 Generator/Motor
210 Pumpenturbine
211 Verbindungsrohr zum Außenspeicher
212 Verbindungsrohr zum Energiespeicher
213 Absperrschieber Pumpe zu Speicher
214 Absperrventil Pumpe zu Außenspeicher
215 Wabenförmiges Einzelmodul zur senkrechten Raumabstützung
216 Stahlseil zur Folienstützung
217 Wasserstrahldüse zum Navigieren des Speichers beim Ab- und Auftauchen
218 Kugelschieber zur Umschaltung der Pumpturbine auf Speicherbetrieb, Wasserstrahldüse oder Nivellieren des Wasserkissens (204)
219 Ringförmige Auflagefläche
220 Steuerzentrale und Umspannmodul
221 Abspannseile zur Verankerung
222 Seekabel zur Stromübertragung zur Küste
223 Verbindungskabel zur Stromübertragung und Steuerung
224 Verbindungskanal von Pumpturbine zum Umgebungswasser
225 Auftriebskörper
600 Roboter in Art eines Industrieroboters, platziert auf beweglichen Greifarmen
601 Greifarm zweigeteilt, geeignet zum Umfassen einer z.B. senkrechten Wand
602 Senkrechte Wand
603 Schiene zur Arbeitsbereichserweiterung und platzierung mehrerer 3D-Plotterroboter
604 3D-Druckkopf zum Plotten der Schalung sowie einer zweiten Düse für das Befüllen mit Beton

## Patentansprüche

1. Vorrichtung für eine Gruppe miteinander verbundener Zugdrachen : (10) zur Stromerzeugung mittels Windkraft, wobei eine exakte horizontale Positionierung einer Gruppe miteinander verbundener Zugdrachen oder rotierende Flügelräder dadurch ermöglicht ist, dass schräg abgespannte zusätzliche Positionierseile (4) an den Rändern dieser Zugdrachengruppe ähnlich wie beim Abspannen von Hauszelten eine feste Position des Zugdrachens ermöglicht, wobei die Gruppe von Zugdrachen **dadurch gekennzeichnet ist, dass** mehrere miteinander verbundene und gleichmäßig bewegte Zugdrachen zu einer Gruppe verbunden sind, wobei jeder Zugdrachen innerhalb dieser Gruppe hierzu mit seinen benachbarten Zugdrachen netzartig mittels Verbindungsseilen verbunden ist, wobei zwei Zugseile (5) zur Zugkrafteinstellung und -Übertragung vorhanden sind.

2. Vorrichtung für einen Zugdrachen nach Anspruch 1, **dadurch gekennzeichnet, dass** wischen den Schirmzugseilen (1) sowie dem Schirmsteuerseil (2) und der Seilumlenkrolle (6) Drehlager (8 und 9) platziert sind um bei kreisenden Bewegungen einer gesamten Zugdrachengruppe das endlose Drehen einzelnen Zugdrachen bzw. rotierender Flügelräder zu ermöglichen trotz horizontal drehfester Anordnung der Seilrollen sowie des gesamten Drachenverbundes (32).

3. Vorrichtung für einen Zugdrachen nach Anspruch 1, **dadurch gekennzeichnet, dass** Das Verhältnis der Zugkraft und Seillängen an einem oder einer Gruppe von Zugdrachen umgebenden Positionierungsseilen der Erkennung der jeweils aktuellen Windrichtung dient

4. Vorrichtung für einen Zugdrachen nach Anspruch 1, **dadurch gekennzeichnet, dass** die Bodenstation und deren Seiltrommeln sowie die beiden Zugseile mit ihrer Seilumlenkrolle drehfest angeordnet sind

## Claims

1. Device for a group of interconnected towing kites (10) for power generation by means of wind power, wherein an exact horizontal positioning of a group of interconnected towing kites or rotating impellers is enabled by the fact that obliquely guyed additional positioning ropes (4) at the edges of this towing kite group enable a fixed position of the towing kite, similar to the guying of house tents, wherein the group of towing kites,
Is **characterised in that**
a plurality of towing kites which are connected to one another and moved uniformly are connected to form a group, each towing kite within this group being connected to its adjacent towing kite in a net-like manner for this purpose by means of connecting ropes, two towing ropes (5) being provided for adjusting and transmitting the tractive force.

2. Device for a towing kite according to claim 1, **characterized in that** between the towing kite ropes (1) as well as the towing kite control rope (2) and the rope deflection pulley (6) pivot bearings (8 and 9) are placed in order to enable the endless rotation of individual towing kites or rotating impellers during circular movements of an entire group of towing kites in spite of the horizontally rotationally fixed arrangement of the rope pulleys and the entire kite assembly (32).

3. Device for a towing kite according to claim 1, **characterised in that** the ratio of the tractive force and rope lengths on one or a group of positioning ropes surrounding towing kites serves to detect the current wind direction in each case.

4. Device for a towing kite according to claim 1, **characterised in that** the ground station and its rope drums as well as the two towing ropes with their rope deflection pulley are non-rotatably arranged.

## Revendications

1. Dispositif pour un groupe de cerfs-volants de traction (10) connectés l'un à l'autre pour la production de courant au moyen d'énergie éolienne, dans lequel un positionnement horizontal exact d'un groupe de cerfs-volants de traction ou roues à ailettes rotatives connectés l'un à l'autre est rendu possible par le fait que des câbles de positionnement additionnels (4) haubanés de manière oblique aux bords de ce groupe de cerfs-volants de traction de manière similaire à l'haubanage de tentes d'habitation permettent une position fixe du cerf-volant de traction, dans lequel le groupe de cerfs-volants de traction est **caractérisé par le fait que** plusieurs cerfs-volants de traction connectés l'un à l'autre et se déplaçant de manière uniforme sont connectés pour former un groupe, où chaque cerf-volant de traction dans ce groupe est connecté à son cerf-volant de traction adjacent en forme de filet au moyen de câbles de connexion, dans lequel sont présents deux câbles de traction (5) pour le réglage et la transmission de la force de traction.

2. Dispositif pour un cerf-volant de traction selon la revendication 1, **caractérisé par le fait qu'**entre les câbles de traction en parapluie (1) ainsi qu'entre le câble de commande en parapluie (2) et la poulie de renvoi de câble (6) sont placés des paliers pivotants (8 et 9) pour permettre, en cas de mouvements circulaires de tout un groupe de cerfs-volants de traction, la rotation sans fin des cerfs-volants de traction ou roues à ailettes rotatives individuels, malgré la disposition immobile en rotation horizontale des poulies ainsi que de l'ensemble du groupe de cerfs-volants (32).

3. Dispositif pour un cerf-volant de traction selon la revendication 1, **caractérisé par le fait que** le rapport entre la force de traction et les longueurs de câble sur les câbles de positionnement entourant un ou un groupe de cerfs-volants de traction sert à identifier la direction du vent actuelle respective.

4. Dispositif pour un cerf-volant de traction selon la revendication 1, **caractérisé par le fait que** la station au sol et ses tambours de câbles ainsi que les deux câbles de traction avec leur poulie de renvoi de câble sont disposés immobiles en rotation.
